# FASCICULE DE BREVET EUROPEEN

(11) **EP 0 484 222 B1**
(45) Date de publication et mention de la délivrance du brevet: **05.04.1995**
(21) Numéro de dépôt: 91402889.9
(22) Date de dépôt: 29.10.1991
(51) Int. Cl.: C01B 17/775, C25B 1/22, B01D 53/34

(54) **Procédé de traitement de gaz contenant du dioxyde de soufre**
Verfahren zur Behandlung von Schwefeldioxid enthaltenden Gasen
Process for the treatment of gases containing sulphur dioxide

(30) Priorité: 29.10.1990 FR 9013360
(43) Date de publication de la demande: 06.05.1992
(73) Titulaire: SOCREMATIC, Saint Ouen L'Aumone (Val d'Oise) (FR); Dyens, Pierre, Saint Ouen L'Aumone (Val d'Oise) (FR)
(72) Inventeur: Dyens, Pierre, Saint Ouen l'Aumone (Val d'Oise) (FR)
(74) Mandataire: Cabinet HERRBURGER

(56) Documents cités:
- EP-A- 0 119 474
- WO-A-90/08845
- US-A- 3 980 454
- US-A- 4 830 718
- CHEMICAL ABSTRACTS, vol. 82, no. 8, Février 1975, Columbus, Ohio, US; abstract no. 4569 G, H. SANO: 'Sulfuric acid from aqueous solution of sulfurous acid.' page 171;

## Description

La présente invention concerne un procédé de traitement de gaz contenant du dioxyde de soufre par oxydation et absorption dans l'eau ou dans une solution aqueuse notamment une solution diluée d'acide sulfurique.

Il est bien connu que le dioxyde de soufre ou anhydride sulfureux SO₂ qui, à l'état libre, se présente sous la forme d'un gaz incolore à odeur piquante de soufre en combustion, lacrymogène, et provoquant la toux, constitue une importante source de pollution atmosphérique.

Or, de nombreuses industries engendrent des rejets gazeux plus ou moins importants : parmi celles-ci, on peut, à titre d'exemple, citer la combustion du soufre présent naturellement dans tous les combustibles fossiles et leurs dérivés, utilisés dans les installations de combustion domestiques et industrielles, ainsi que certains processus industriels tels que le grillage des minerais sulfureux (FeS₂ pyrite, ZnS blende, PbS galène) ou encore la fabrication de l'acide sulfurique.

Compte tenu de leur importance et de leur caractère nocif, de nombreux chercheurs ont tenté de mettre au point des procédés de traitement de ces rejets riches en dioxyde de soufre.

Parmi les procédés de ce type qui ont déjà été proposé, on peut citer, à titre d'exemple, des procédés d'absorption-lavage par des solutions alcalines ou avec de l'acide sulfurique dilué qui se concentre et de l'eau oxygénée, des procédés d'absorption sur des tamis moléculaires ou encore des procédés d'oxydation catalytique.

Les processus d'absorption du dioxyde de soufre par des solutions alcalines, qui sont actuellement utilisés dans de nombreux types d'installation, posent un certain nombre de problèmes économiques et écologiques, et présentent l'inconvénient de ne pas permettre de récupérer de façon simple le soufre sous une forme utilisable. Pour cette raison, on s'oriente actuellement de plus en plus vers l'utilisation de procédés d'oxydation du dioxyde de soufre en trioxyde de soufre et en acide sulfurique par de l'air ou de l'oxygène pur en milieu aqueux qui conduisent à l'obtention d'une solution plus ou moins concentrée d'acide sulfurique.

Cette oxydation présente toutefois l'inconvénient d'être particulièrement lente, et de nécessiter l'addition de catalyseurs au milieu d'oxydation pour permettre sa réalisation avec une cinétique compatible avec les contraintes d'une exploitation industrielle. Parmi les nombreux catalyseurs proposés à ce jour, on peut citer le charbon actif, le platine, le manganèse, ou des sels métalliques tels que par exemple les oxydes de vanadium V₂O₅, de chrome Cr₂O₃ ou de fer Fe₂O₃. Pour la mise en oeuvre de tels catalyseurs, on peut utiliser soit des réacteurs agités dans le cas où la solution contenant le dioxyde de soufre à éliminer a été préparée antérieurement, soit des colonnes à garnissage ou à plateaux qui permettent d'absorber le gaz à traiter avant son oxydation.

Toutefois, et malgré leurs avantages, ces procédés n'ont pas permis d'obtenir totalement satisfaction compte tenu, en particulier, du caractère incommode de leur mise en oeuvre, de leur prix de revient, du risque d'en retrouver des traces dans l'acide sulfurique obtenu et, avant tout, du caractère incomplet de l'oxydation du dioxyde de soufre présent.

Pour remédier à ces inconvénients, on a déjà proposé conformément au document US-A-4 830 718 un procédé du type ci-dessus par lequel on fait circuler au moyen d'une pompe l'eau ou la solution absorbante dans un circuit fermé contenant une cellule électrolytique ainsi qu'un dispositif d'absorption dans lequel on introduit le gaz à traiter qui se trouve alors absorbé par la solution en circulation avant d'être oxydé en acide sulfurique. Il est expressément précisé que ce procédé fonctionne en l'absence totale de catalyseurs et d'agents oxydant.

La présente invention a pour objet de remédier à ces inconvénients en proposant un nouveau procédé de traitement de gaz contenant du dioxyde de soufre par oxydation et absorption dans l'eau ou dans une solution aqueuse notamment une solution diluée d'acide sulfurique qui se concentre, qui soit susceptible de garantir une oxydation la plus complète et la plus totale du dioxyde de soufre.

Ce procédé est caractérisé en ce que le dispositif d'absorption est un réacteur de type "slurry" dont la phase liquide est chargée par des particules de charbon actif faisant office de catalyseur de la réaction d'oxydation du dioxyde de soufre.

L'originalité de ce procédé réside dans l'utilisation d'un dispositif d'absorption particulier à savoir un réacteur de type "slurry" qui s'est avéré beaucoup plus performant, dans ce cas particulier, que les autres dispositifs d'absorption connus (tels les colonnes à garnissage à co- ou contre-courant "trickle-bed" et "counterflow packed-bed") et a permis d'obtenir une oxydation rapide et totale du dioxyde de soufre.

L'expérience a, par ailleurs, permis de constater qu'il est avantageux d'utiliser des charbons de provenance directement végétale (noix de coco, pékan, bois ...) qui se sont avérés beaucoup plus efficaces que ceux provenant de matière fossile (charbon, pétrole ...)

Conformément à l'invention, ce charbon actif peut être dopé ou non par un dépôt métallique.

Bien entendu, et de manière classique, la quantité et la taille des particules de catalyseurs conditionnent elles aussi le rendement de l'épuration.

La cellule électrolytique utilisée pour pouvoir disposer au niveau du dispositif d'absorption d'une quantité d'oxygène suffisante peut être quelconque sans pour cela sortir du cadre de l'invention ; à titre d'exemple, on peut avantageusement utiliser un réacteur à électrodes parallèles ou un réacteur à électrodes concentriques. L'expérience a permis de démontrer que, dans ce dernier cas, la vitesse d'oxydation, déterminée par la pente de la courbe représentant les variations de la concentration dans la solution anodique en fonction du temps, est particulièrement rapide.

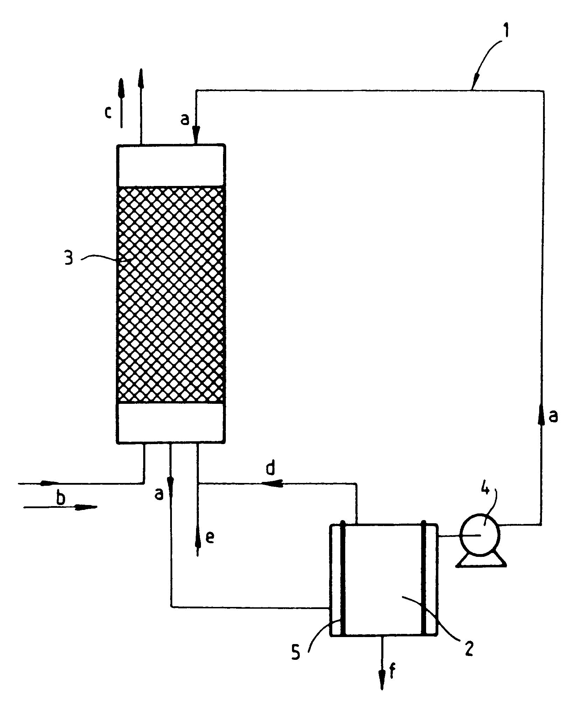

Les caractéristiques du procédé qui fait l'objet de l'invention seront décrites plus en détail en se référant au dessin annexé qui est une représentation schématique d'une installation permettant la mise en oeuvre de ce procédé.

Selon cette figure, on fait circuler une solution diluée d'acide sulfurique qui se concentre dans un circuit fermé 1 contenant un réacteur électrochimique 2 ainsi qu'un réacteur 3 de type "slurry" dont la phase liquide est chargée par des particules de charbon actif faisant office de catalyseur d'oxydation.

Une pompe de circulation 4 permet de faire circuler la solution dans le sens représenté par les flèches a.

Le mélange gazeux air + SO₂ est introduit selon la flèche b dans le réacteur 3 au niveau duquel le dioxyde de soufre est absorbé par la solution en circulation selon les flèches a et oxydé en acide sulfurique sous l'action du charbon actif. L'air épuré quitte le réacteur selon la flèche c.

Au niveau de l'anode 5 du réacteur électrochimique 2, de l'oxygène peut être créé sous certaines conditions. Il est recyclé, selon la flèche d, à la partie inférieure du réacteur 3 au niveau duquel il vient améliorer les propriétés du charbon actif. De l'oxygène peut être ajouté à l'air primaire contenu dans les gaz à traiter.

L'acide sulfurique est recueilli selon la flèche f à la sortie du réacteur 2.

L'exemple de mise en oeuvre décrit ci-dessus en se référant à la figure ne doit, bien entendu, pas être considéré comme étant limitatif de l'invention et celle-ci pourrait s'étendre à des variantes autres ; on peut même envisager une extension du procédé au traitement de gaz contenant un mélange de dioxyde de soufre et d'oxyde d'azote.

## Revendications

1. Procédé de traitement de gaz contenant du dioxyde de soufre par oxydation et absorption dans l'eau ou dans une solution aqueuse, notamment une solution diluée d'acide sulfurique qui se concentre, procédé par lequel on fait circuler, au moyen d'une pompe, l'eau ou la solution absorbante dans un circuit fermé contenant une cellule électrolytique ainsi qu'un dispositif d'absorption dans lequel on introduit le gaz à traiter qui se trouve alors absorbé par la solution en circulation avant d'être oxydé en acide sulfurique, procédé caractérisé en ce que le dispositif d'absorption (3) est un réacteur de type "slurry" dont la phase liquide est chargée par des particules de charbon actif faisant office de catalyseur de la réaction d'oxydation du dioxyde de soufre.

2. Procédé selon la revendication 1, caractérisé en ce que le charbon actif est d'origine végétale.

## Claims

1. Process for treating gas containing sulphur dioxide by oxidation and absorption in water or in an aqueous solution, in particular a dilute sulphuric acid solution which is concentrated, by means of which process the water or absorbent solution is circulated by a pump in a closed circuit containing an electrolytic cell as well as an absorption device into which the gas to be treated is introduced, which gas is then absorbed by the circulating solution before being oxidised to form sulphuric acid, characterised in that the absorption device (3) is a slurry-type reactor of which the liquid phase is charged with particles of activated carbon acting as a catalyst for the oxidation reaction of the sulphur dioxide.

2. Process according to Claim 1, characterised in that the activated carbon is of plant origin.

## Patentansprüche

1. Verfahren zur Behandlung von Schwefeldioxid enthaltenden Gasen durch Oxidation und Absorption in Wasser oder in einer wässrigen Lösung, insbesondere eine verdünnte Lösung von Schwefelsäure, die sich konzentriert, wobei man bei den Verfahren das Wasser oder die absorbierende Lösung durch eine Pumpe in einem geschlossenen Kreislauf umwälzt, der eine elektrolytische Zelle aufweist, wie eine Absorptionsvorrichtung, in welche das zu behandelnde Gas eingeleitet wird, das sodann von der in Umwälzung befindlichen Lösung absorbiert wird, bevor es in Schwefelsäure oxidiert wird, dadurch gekennzeichnet, daß die Absorptionsvorrichtung (3) ein sogenannter "Slurry"-Reaktor ist, dessen flüssige Phase mit Aktivkohlepartikeln beschickt wird, die als Katalysator der Oxidationsreaktion des Schwefeldioxids wirken.

2. Verfahren nach Anspruch 1, dadurch gekennzeichnet, daß die Aktivkohle vegetabilischen Ursprunges ist.
